# EUROPEAN PATENT APPLICATION

(11) **EP 1 422 959 A1**
(43) Date of publication of application: **26.05.2004**
(21) Application number: 02445157.7
(22) Date of filing: 21.11.2002
(51) Int. Cl.: H04Q 7/38

(54) **Creating a neighbour cell list depending on the velocity vector of a user equipment**

(71) Applicant: Telefonaktiebolaget LM Ericsson (publ), 16483 Stockholm (SE)
(72) Inventor: Willars, Per Hans Ake, 115 36 Stockholm (SE); Persson, Bengt Gunnar Harald, 168 66 Bromma (SE)
(74) Representative: Sjöberg, Mats Hakan

(57) **Abstract**

The invention relates to a controller (3, 4) in a radio network including a number of cells, in which network a user equipment (29) is in communication with at least one cell (9, 14) defining an active set (30). Said user equipment has a velocity vector including position, speed and direction. According to the invention the controller is arranged to receive information related to whole or part of said velocity vector. The controller is arranged to create a filtered neighbour cell list (34) by filtering a neighbour cell list (31) associated with said active set (30). Said filtering is made depending on said velocity vector related information. The controller is arranged to transmit the filtered neighbour cell list (34) to the user equipment (29), thereby enabling measurement of pilot signal strength for cells in the filtered neighbour cell list.

## Description

### TECHNICAL FIELD OF THE INVENTION

The present invention relates to a controller, a user equipment and methods in these, in a radio network including a number of cells, in which network a user equipment is in communication with at least one cell defining an active set.

### DESCRIPTION OF RELATED ART

Cellular communication systems conventionally include a plurality of base stations arranged in a pattern so as to define a plurality of overlapping cells which provide radio communication support in a geographic area. A remote transmitter/ receiver unit, such as a user equipment, communicates with the base station of the corresponding cell in which the user equipment resides. This communication typically occurs through a channel assigned to the connection by the system. When the user equipment is mobile, or when the base station is non-stationary (e.g. an orbiting satellite), the user equipment may transition between adjacent cells due to the relative movement between the user equipment and the base station.

Absent some intervention by the system, this transitioning would eventually terminate the connection because the received signal strength associated with the signals would diminish to a level where either the base station or remote station cannot adequately receive the other's transmissions to decode information associated therewith. Transitioning between cells can additionally cause a significant degradation in signal quality. This signal quality degradation is typically measured at the user equipment by a quality measure such as bit error rate (BER). Signal quality degradation and termination of communication due to inadequate signal strength represent aspects of the cell transition problem in mobile cellular communications.

A solution to these aspects of the cell transition problem is commonly called "handover." This conventional technique "hands off" an in-process communication with a user equipment from one base station in a first cell to another base station in another cell. This hand-over process maintains the continuity of the connection and prevents the termination of the call when the user equipment is moving from one cell to another. The hand-over process may be accomplished using a number of system dependent methods.

In a CDMA (Code Division Multiple Access) system, a user equipment may maintain a connection with more than one base station at a time in a process known as soft hand-over. In soft hand-over, the user equipment maintains simultaneous connection with more than one base station so as to induce a diversity effect that improves the quality of the connection. This diversity effect is achieved through communication with different base stations over different air-interface paths that have different fading properties. The combination of signals over the different air-interface paths can improve the quality of the connection and can reduce transmission power requirements between the base and user equipment.

Soft hand-over in a CDMA (Code Division Multiple Access) system such as, for example IS-95, conventionally involves measurements of known pilot signals transmitted from base stations in the system. A user equipment measures the signal quality of received pilot signals to determine which base station is suitable to serve that user equipment. When the user equipment selects a base station that is associated with a preferred signal quality measurement, the user equipment demodulates the transmitted paging channel from that base station and then receives system parameter information from the base station.

The system parameter information received from the base station includes a list of neighbour cells that is transmitted from the base station to the user equipment on the paging channel in different messages such as the neighbour list message, the extended neighbour list message, or the general neighbour list message.

Upon receipt of any of these messages, the user equipment stores the list of neighbour cells as its neighbour set. The user equipment then measures the received signal quality of the pilot signal from each base station in the neighbour set. Those base stations with pilot signals that have signal qualities above certain thresholds are then stored in a candidate set. Pilot signals from base stations in the candidate set are then measured by the user equipment more frequently than the base stations in the neighbour set.

During an actual call from the user equipment, the individual or plurality of base stations in the candidate set that has the best signal quality are stored in an active set. The base stations currently designated in the active set become the soft hand-over legs for the communication. When the signal quality from the base stations in the legs of the soft hand-over drop below a certain threshold for a given time period, they are dropped from the active set.

Furthermore, base stations in the candidate set are added to the active set when their associated pilot signal quality reaches a certain threshold. A user path is then set up to the base station newly added to the active set. This soft hand-over process occurs continuously while a user equipment is on a call. A serving base station may subsequently revise the neighbour list for the user equipment operating on the traffic channel by sending a neighbour list update message or an extended neighbour list update message.

The conventional soft hand-over technique described above is deficient, however, because, for moving user equipments, some cells are more suitable hand-over leg candidates than others. If a user equipment is moving away from one or more base stations, the signal quality from these base stations may still be sufficient to cause them to be added to the active set. Thus a hand-over leg, in this instance, will be set-up only to be released again in a short time as the user equipment moves away from the base station. Therefore, every time a hand-over leg is added or removed, extra signalling is required which causes unnecessary signalling overhead in the system. Additionally, removal or addition of a hand-over leg requires the burdensome allocation and release of system resources.

This has been partly solved in WO 00/38466 by modifying the candidate set. User equipment location and velocity information is used to estimate the weighted probability of the user equipment arriving in neighbouring cells. "Bias values" are then produced for the measurements for the cells that the user equipment is more likely to be entering in or be located in. Thus, said measurements are modified and thus also the choice on which cells are included in the candidate set is modified. A disadvantage with this is that long messages containing the neighbouring cells have to be sent occupying the traffic in the cell. Further, it still requires a lot of calculations in the user equipment in addition to a lot of measurements.

In W002/37733 measurements are only performed on the candidate set (called monitored set in the application). Thus, the neighbour set equals the candidate set. Each active set is associated with a predefined corresponding candidate set. This reduces the number of neighbouring cells being sent and the measurements being made. A disadvantage with this is less flexibility, especially if anything happens in the network. Another disadvantage is a risk of missing important cells especially when the user equipment is moving fast.

In systems using FDMA (Frequency Division Multiple Access) or TDMA (Time Division Multiple Access), such as GSM (Global System for Mobile communications) different sets can also be considered to be used, even if that terminology is not used. However, what may be called the active set then includes only one cell, since only hard handover is used. Further, there is no distinction between a neighbour set and a candidate set. In EP 0 986 279 is shown an invention where the neighbour cell list sent from the system consists of two parts: First a first part with information on cells in a higher cell hierarchy, i.e. larger cells. Then a second part with information on cells in a lower cell hierarchy, i.e. smaller cells. The second part is modified depending on where the user equipment is positioned. Also in this application, each "active set" (i.e. serving cell) is associated with a predefined corresponding "candidate set", giving the same disadvantages.

In US 6131030 is shown how cell handover information such as neighbour cell lists can be transferred in different parts of the system.

### SUMMARY OF THE INVENTION

The purpose of the invention is to find a solution that reduces the handover related signalling in a radio telecommunications system that can be used with any user equipment without losing flexibility.

The problem with older solution is that they cannot achieve that.

According to the invention a controller, such as e.g. a radio network controller, base station controller or similar, is arranged to receive information related to whole or part of a velocity vector including position, speed and direction from the user equipment. The controller is arranged to create a filtered neighbour cell list by filtering a neighbour cell list associated with an active set that the user equipment is using. Said filtering is made depending on said velocity vector related information. The controller is arranged to transmit the filtered neighbour cell list to the user equipment, thereby enabling measurement of pilot signal strength for cells in the filtered neighbour cell list.

An advantage with the invention is that the message that the controller sends with the filtered neighbour cell list is shorter than it would have been without filtering. This occupies the radio interface less. Further, the user equipment need not measure pilot signal strength for so many cells, but only for the most important cells and can thereby make the measurements more frequently. Further, a greater flexibility is achieved, since the filtered cell list may be updated also between handovers.

The invention will now be described in greater detail with reference to enclosed Figures.

### DESCRIPTION OF THE DRAWINGS

Figure 1a and b shows a radio network system with different cell sets indicated
Figure 2 shows cells on different hierarchical levels
Figure 3a and b shows a radio network system with different cell sets indicated, e.g. a filtered neighbour set according to the invention
Figure 4 shows the work share between a SRNC and a DRNC

### DESCRIPTION OF PREFERRED EMBODIMENTS

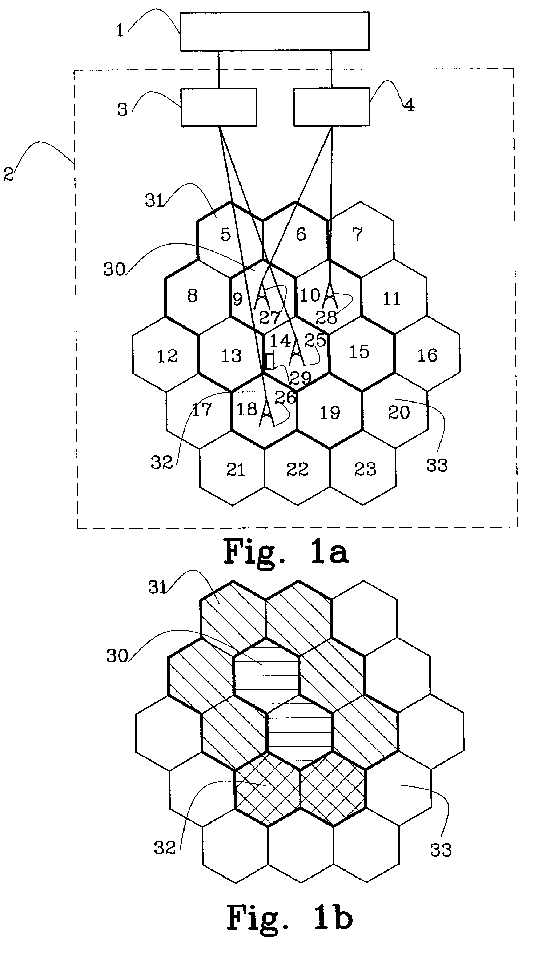

In Figure 1a is shown a mobile system including a core network 1 and a radio access network (RAN) 2. The RAN 2 is the part of the network that is responsible for the radio transmission and control of the radio connection. The RAN 2 includes a number of radio network controllers (RNC) 3, 4. The RNC may have other names in other mobile systems, such as base station controller.

The RNC 3, 4 controls radio resources and radio connectivity within a set of cells 9, 10, 14, 18. A cell 5, 6, 7, 8, 9, 10, 11, 12, 13, 14, 15, 16, 17, 18, 19, 20, 21, 22, 23 covers a geographical area. Each cell is identified by a unique identity, which is broadcast in the cell. The radio coverage in a cell is provided by equipment in a base station (BS) 25, 26, 27, 28, also called node B. A base station 25, 26, 27, 28 may handle the radio transmission and reception within one or more cells. For simplicity, this description will describe it as if there is one base station per cell. It is however to be noted that thus "a base station" in this context is considered equivalent also to "a part of a base station controlling a certain cell".

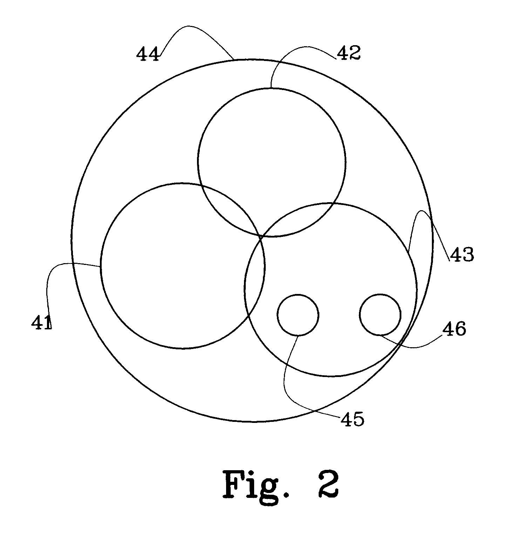

In Figure 1a only two RNCs 3, 4 communicating with four BSs 25, 26, 27, 28 are drawn for the sake of clarity. The other cells are of course handled in a similar way. A radio network subsystem (RNS) includes a RNC 3 with its associated BSs 25, 26 and cells 14, 18. Further, the cells are, as is common, simplified drawn as hexagons. In practise, different cells have overlapping geographic areas, compare Figure 2. Further, due to the surrounding environment the areas do not have that nice regular shape either. These irregularities is one reason behind the present invention.

There may be more than one cell covering the same geographical area. An example is shown in Figure 2, where a hierarchical cell structure is used. Microcells 41, 42, 43 are normally small cells covering areas with a radius of a few hundred meters. Macrocells 44, also called umbrella cells, normally covers a radius of 1 km or more. Picocells 45, 46 normally cover indoor areas with a cell radius of a few dozen metres. There may also be large satellite cells (not shown) controlled by satellites.

In Figure 1a is also shown a user equipment (UE) 29, which may be e.g. a mobile terminal by which a user can access services offered by the core network 1. In Figure 1a the UE 29 is communicating simultaneously with two BSs 25, 27 that thus serves an active set 30 of cells 9, 14. To make Figure 1a clearer, different cell sets are also shown separately in Figure 1b, with hatched markings. The active set 30 is there marked with horizontal lines.

The cells 5, 6, 8, 10, 13, 15, 18, 19 that are near the active set 30 - geographically near or near in a radio-fashioned way - are defined as the neighbour set 31, marked in Figure 1b with lines angled to the left. The cells in the neighbour set 31 are potential choices for the active set 30.

Normally, a neighbour set is predefined in the RNC for each cell. What is interesting is however a neighbour set for the present active set. To obtain a neighbour set for an active set it is however easy to add the neighbour set information for the cells included in the active set. An equivalent - but more complex and memory-consuming - alternative would be to predefine a neighbour set for all conceivable active sets.

A cell list for the neighbour set 31 - corresponding to the present active set - is sent from the RNC 3 to the UE 29. The UE 29 then measures pilot signals from the cells in the neighbour set 31. The cells 18, 19 with the strongest pilot tones are stored in a candidate set 32 and measured more frequently. The candidate set 32 is marked in Figure 1b with lines angled to the right. Since the candidate set 32 is a subset of the neighbour set 31, they thus appear chequered. The remaining cells 7, 11, 12, 16, 17, 20, 21, 22, 23 and others not shown are then considered a remainder set 33.

Figure 1a and b only shows cells on the same hierarchical level, but of course the cell sets may include cells from different hierarchical levels, i.e. e.g. both microcells and macrocells.

According to the invention the cell list for the neighbour set 31 should be filtered before being sent to the UE 29. The filtering should be made considering where the UE is and/or where it is likely that the UE will be in the future. A good way of doing this is to study the velocity vector of the UE 29. The velocity vector includes the current position of the UE 29 and its speed and direction. The speed and direction may of course be zero if the UE 29 is not moving. The different parts of the velocity vector might be given with different accuracy. It might e.g. be enough to know that the UE is within a certain area, without knowing its exact position.

A new filtered neighbour set could be made each time there is a handover. However, preferably it is made more often. An alternative is to update it at certain time intervals. Another alternative is to update it when the velocity vector of the UE has changed with a certain amount. A further alternative is to update it more often the faster the UE is moving, etc.

In order to know which cells to filter out and not, it may be advantageous for the RNC to have some extra information on the cells, e.g. which cells are near each other - near geographically and/or in a radio-fashioned way.

It is also possible to define certain areas of cells. In a network with cells on different hierarchical levels it may be advantageous for the RNC to have information on which type a certain cell is of - type in the meaning of being on a certain hierarchical level.

Further, in a network with cells using different radio access technologies (RAT) on different hierarchical levels it may be advantageous for the RNC to have information on which type a certain cell is of - type in the meaning of using a certain RAT. Further, if the operator of the network co-operates with the operator with another network and there thus may be neighbouring cells belonging to different networks, then it may be advantageous for the RNC to have information on which network a cell belongs to. Also other information may be used for the filtering. How the information may be used will be described below.

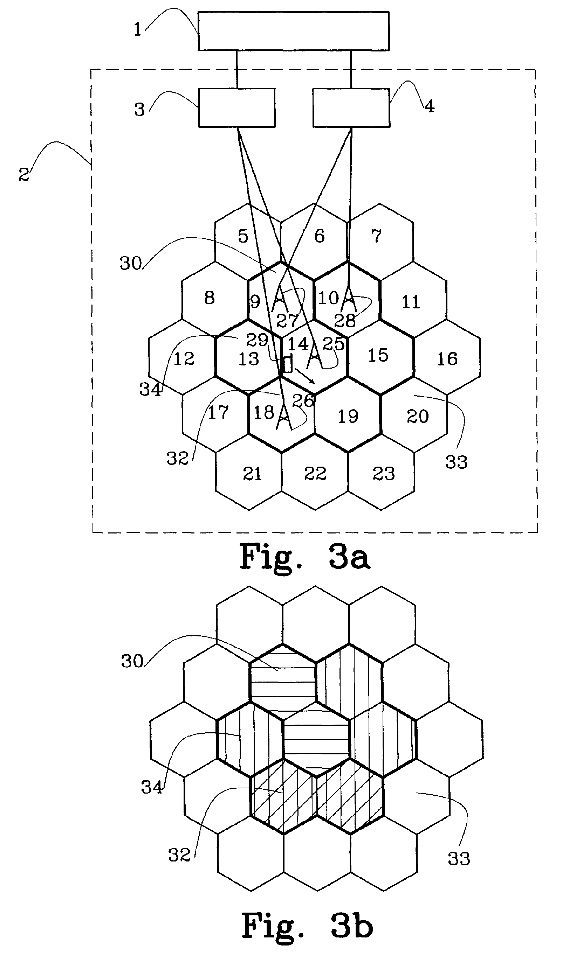

Figure 3a and b is the same as Figure 1a and b. However, as an example, it may be noted that the UE 29 positioned in cell 5 is far from cells 5 and 6. Thus, there is no need for making measurements for the neighbour cells 5 and 6. Thus, the RNC 3 can filter the neighbour set and transmit only a filtered neighbour set 32 without the cells 5 and 6.

As a further example, it may be noted that the UE 29 is moving towards cell 19. Thus, there is no need for making measurements for the neighbour cell 8 in the opposite direction either. Thus, the RNC 3 can filter the neighbour set and transmit only a filtered neighbour set 32 without the cells 5, 6 and 8. Said filtered neighbour set 32 is marked with vertical lines in Figure 3a and b instead of the unfiltered neighbour set 31 in Figure 1a and b. The UE 29 now only makes measurements on the filtered neighbour set 34.

How many cells to filter out - and thus exclude from measurement - from the neighbour set is of course a question that needs to be considered. The advantages of filtering out many cells are that the transmissions to the UE will be shorter and that the UE does not have to make so many measurements. The disadvantage is that if too many cells are filtered out, it is possible to miss good handover candidates, thus possibly decreasing the quality of a call.

In Figure 3a and b it might be possible to filter out also cell 10, but if the adjacent cell 13 is filtered out because the UE is moving in almost the opposite direction, there may be a problem if the UE suddenly turns and travels in the opposite direction. Since cell 13 is very near it is probably on the edge of becoming included in the candidate set. The reason that it is not already included in the candidate set is probably that the pilot signal from cell 19 for some reason is stronger than that from cell 13, which might happen even though cell 13 is closer geographically.

According to one embodiment the filtering can thus be made dependent on the position of the UE, as in Figure 3a and b. A distance threshold may be set and cells lying further away may be filtered out. An alternative is to filter out cells not lying within a specified area. A further alternative is to set a level threshold on pilot signal strength and filter out the cells having with a pilot signal strength below said level threshold. The last alternative, however, requires that an earlier measurement have been made on pilot signal strength. A disadvantage with the last alternative is that said earlier measurement might not be sufficiently up to date and there is a danger that this may cause that interesting cells are unnecessarily excluded. The advantages may be bigger if combined with the geographically near alternative.

In another embodiment the direction of the UE is also taken into account, as in Figure 3a and b. In the latter, for one extreme case, only the cell or cells lying in the opposite direction of the direction that the UE is moving are filtered away. In the other extreme case only the cell or cells lying in the same direction as that the UE is moving are kept in the filtered neighbour set. Of course all variants in between are possible.

In another embodiment this is combined by looking at the speed of the UE. If the UE is moving fast it may be advantageous to keep more cells in the filtered neighbour set, because it is a greater likelihood that they will be reached in a short time. On the other hand, if the UE is moving slowly or not at all it may be advantageous to have fewer cells in the filtered neighbour set.

According to a further embodiment, when there are cells on different hierarchical levels as in Figure 2, the filtering may be made differently on different hierarchical levels depending on the speed of the UE. If the UE is moving fast, then larger cells, such as macrocells, becomes more important than smaller cells, such as microcells and picocells. Since the UE will stay only for a short while in the smaller cells, then it is not of much use to handover to them. Thus, it is not of much use to measure the pilot signals of the smaller cells either. Thus, the faster the UE is moving, the more the larger cells should be prioritised and thus, the more the smaller cells should be filtered out. If on the other hand, the UE is moving slowly or being still it may be more advantageous to use microcells and picocells. A simplified version could be to have a speed threshold. Above the speed threshold e.g. microcells and picocells are filtered out, but macrocells kept. Below the speed threshold e.g. macrocells are filtered out, but microcells and picocells kept.

How is the RNC going to know which velocity vector a UE has? There are several solutions to that and a few will be mentioned. According to one embodiment, for the position it is possible to use Global Positioning technology (GPS). There exists a network assisted GPS (A-GPS), in which the network transmits some information to the UE, thus enabling to make the GPS function in the UE less complicated.

Another embodiment for estimating the position is to measure the round trip time (RTT), i.e. the time it takes for a signal to travel from a BS to the UE and back. This will give the distance from the BS. In the case of using one BS per cell this will thus give a circle on which the UE may be. In the case of using one BS for more than one cell this will thus give a circle segment on which the UE may be. This may be enough to exclude e.g. picocells lying far from the circle. To obtain a more accurate position it is possible to measure the RTT relative to at least two BSs, which will give a crosspoint.

There exists another embodiment to estimate position when the UE receives signals from two or more BSs. It is then possible for the UE to measure the observed time difference of arrival (OTDOA) relative to said BSs, which will give a measure on the difference in distance to said BSs. Two BSs will give a curve on where the UE can be found, but three or more BSs will give a more accurate position.

A version of the OTDOA embodiment is to use OTDOA with idle period down link (OTDOA/IPDL). This is an improvement of the OTDOA, meaning that stronger signals from BSs may be shut down temporarily to enable measurement also on weaker signals.

In order to estimate speed and direction, the easiest way is probably to repeatedly measure position and draw conclusions from the changes. An alternative is to measure e.g. the Doppler effect on the frequency that will occur because the UE is moving. This will however give the speed relative to the BS. Thus, it might be more advantageous to make measurements relative to two BSs. A better alternative is to use the Doppler spread, which will give an estimation on the speed of the UE, even if measurements is only made relative to one BS.

According to a further embodiment the neighbour set can also be filtered considering which radio access technology (RAT) that is used in the neighbouring cells. New UEs are often capable of communicating using more than one RAT, e.g. both CDMA and GSM. In order not to switch RAT to and fro continuously, it is possible to prioritise the cells communicating in a predefined RAT, e.g. CDMA and filter out many of the other cells, but preferably not all. An alternative is to filter away many of the cells not communicating in the RAT that the UE is using at the moment, thus causing a kind of hysteresis in the change of RAT.

According to a further embodiment, where there are more than one network to chose from, similar solutions as with the RATs can be used.

Of course, all these embodiments may also be combined with each other.

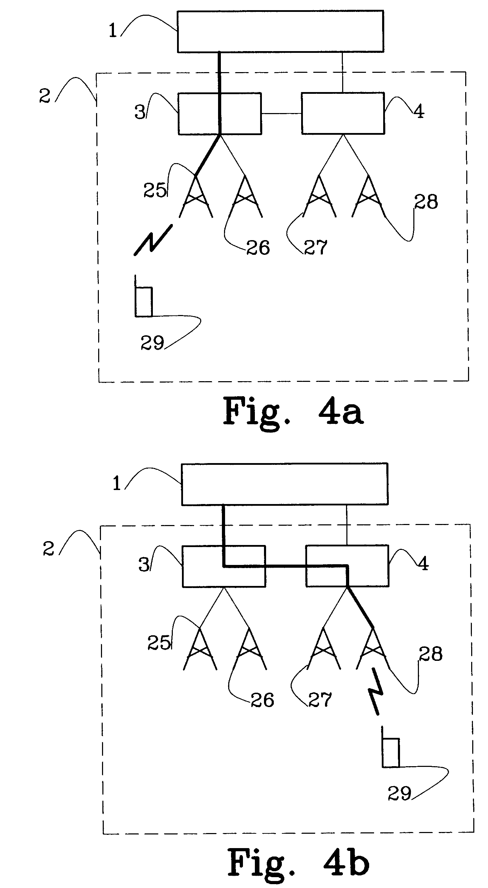

An RNC may have different roles. This is explained in Figure 4a and b, which shows part of the system in Figure 1a. For simplicity, let us say that the active set includes only one cell. It will work in a similar way also with active sets including more than one cell.

As an example, see Figure 4a, let us say that a call first is set up between the core network 1 and the UE 29 via the first RNC 3 and the first BS 25. This means that the first RNC 3 works as a serving RNC (SRNC). In this role the first RNC 3 is in charge of the connection with the UE, i.e. it has full control of said connection inside the RAN 2. The SRNC 3 is thus connected to the core network 1. The RAN 2 decides which RNC 3, 4 that will have the role of SRNC when the connection between UE 29 and RAN 2 is established. Normally, it will be the RNC 3 that controls the cell, where the connection to the UE 29 is initially established, that is assigned the SRNC role for this specific connection to the UE 29.

In Figure 4b, the UE 29 has been handed over to the second BS 28, which is served by the second RNC 4. The first RNC 3, however, still has the role as SRNC. The second RNC 4 assumes a role as drift RNC (DRNC). In this role the second RNC 4 supports the SRNC 3 with radio resources for a connection with the UE 29, as long as the UE 29 needs radio resources in a cell or cells controlled by the DNRC 4. The concepts of SRNC and DRNC are also described in more detail in the previous mentioned US 6131030, where it also is described an example on how to transfer handover information between different RNCs. It may be noted that there exists also the alternative to define a new SRNC when handover is performed, either each time or when the UE has moved a certain distance away from the original SRNC.

The invention may be implemented in different ways in the SRNC and DRNC. One embodiment is for the SRNC to request the DRNC to transmit its full cell list for the neighbour set for the active set in question to the SRNC. Extra information, such as cell type, as exemplified earlier, should also be transmitted. The SRNC is also informed of whole or parts of the velocity vector e.g. in one of the ways described above, when the SRNC is communicating with the UE. The SRNC then filters said neighbour cell list depending on the velocity vector information and transmits a filtered neighbour set to the UE.

Another embodiment is that the SRNC takes the velocity vector information that it received from the UE and transmits said velocity vector information to the DRNC. An alternative is that the SRNC transmits a processed version of said the velocity vector information. An example of the latter might be that the SRNC has noted that the UE is travelling faster than a speed threshold. Thus, the SRNC knows that it is only interested of the macrocells. Instead of sending the complete velocity vector information to the DRNC for processing, the SRNC can simply send a request for macrocells in the neighbour set for the present active set. This request for macrocells may then be seen as velocity vector related information. In the same way the SRNC could e.g. request to have the cells in a specific area transmitted.

The DRNC may then use said processed or non-processed velocity vector information to filter the neighbour set for the active set in question and then transmit the filtered neighbour set to the UE - either directly or preferably via the SRNC.

It is to be noted that the present invention works equally well in all types of networks that in some way are using different sets of cells, disregarding what the sets and other parts of the network are called. Also e.g. the names on technologies for obtaining position, speed and direction may be called differently in different systems, which of course also is of no importance.

## Claims

1. A method in a controller (3, 4) in a radio network including a number of cells, in which network a user equipment (29) is communicating with at least one cell (9, 14) defining an active set (30), said user equipment (29) having a velocity vector including position, speed and direction; **characterized by** the following steps:
- receiving information related to whole or part of said velocity vector;
- creating a filtered neighbour cell list (34) by filtering a neighbour cell list (31) associated with said active set (30), said filtering being made depending on said velocity vector related information; and
- transmitting the filtered neighbour cell list (34) to the user equipment (29), thereby enabling measurement of pilot signal strength for cells in the filtered neighbour cell list.

2. A method according to claim 1, **characterized by** making the filtering depending on the position of the user equipment (29) and filtering out cells that are further away than a distance threshold, are outside a certain area and/or have a pilot tone strength under a level threshold.

3. A method according to claim 1 or 2, **characterized by** making the filtering depending on the direction of the user equipment (29) and filtering out all or some of the cells that are not in said direction.

4. A method according to any of the claims 1-3, **characterized by** selecting how many cells that are to be filtered out depending on the speed of the user equipment (29), so that fewer cells are filtered out when the speed is higher than when the speed is lower.

5. A method according to claim 4, **characterized by**, when a distance threshold and/or level threshold is used, then changing the distance threshold and/or level threshold depending on the speed of the user equipment (29).

6. A method according to any of the claims 1-5, **characterized by**, when the network includes cells on different hierarchical levels, then making the filtering depending on the speed of the user equipment (29) and filtering out all or some of larger cells when the speed is under a speed threshold, while filtering out all or some of smaller cells when the speed is over said speed threshold.

7. A method according to any of the claims 1-6, **characterized by** when the network includes cells using different radio access technologies, then making the filtering depending on which radio access technology is used in the different cells.

8. A method according to any of the claims 1-7, **characterized by** when the network is close to another network, then making the filtering depending on which network the different cells are connected to.

9. A method according to any of the claims 1-8, **characterized by** using GPS technology, round trip time and/or observed time difference of arrival to estimate position of the user equipment (29).

10. A method according to any of the claims 1-9, **characterized by** using change in position to estimate direction and/or speed of the user equipment (29).

11. A method according to any of the claims 1-10, **characterized by** using Doppler effect in frequency to estimate speed of the user equipment (29).

12. A method according to any of the claims 1-11, **characterized by**, when the controller is a serving controller, receiving the neighbour cell list from a drift controller, including extra cell information; and filtering also depending on said extra cell information.

13. A method according to any of the claims 1-11, **characterized by**, when the controller is a drift controller, receiving velocity vector related information from a serving controller; and filtering depending on said velocity vector related information and on extra cell information.

14. A method in a user equipment (29) communicating with at least one cell (9, 14) defining an active set (30) in a radio network, said user equipment (29) having a velocity vector including position, speed and direction, **characterized by** the following steps:
- transmitting information related to whole or part of said velocity vector,
- receiving a filtered neighbour cell list (34), said filtered neighbour cell list (34) having been created by, depending on said velocity vector related information, filtering a neighbour cell list (31) associated with said active set (30);
- measuring pilot signal strength for the cells in the filtered neighbour cell list (34).

15. A method according to claim 14, **characterized by** using GPS technology, round trip time and/or observed time difference of arrival to estimate position of the user equipment (29).

16. A method according to claim 14 0r 15, **characterized by** using change in position to estimate direction and/or speed of the user equipment (29).

17. A method according to any of the claims 14-16, **characterized by** using Doppler effect in frequency to estimate speed of the user equipment (29).

18. A controller (3, 4) in a radio network including a number of cells, in which network a user equipment (29) is in communication with at least one cell (9, 14) defining an active set (30), said user equipment having a velocity vector including position, speed and direction; **characterized in that** the controller is arranged to receive information related to whole or part of said velocity vector; **in that** the controller is arranged to create a filtered neighbour cell list (34) by filtering a neighbour cell list (31) associated with said active set (30), said filtering being made depending on said velocity vector information; and **in that** the controller is arranged to transmit the filtered neighbour cell list (34) to the user equipment (29), thereby enabling measurement of pilot signal strength for cells in the filtered neighbour cell list.

19. A controller according to claim 18, **characterized in that** the controller is arranged to make the filtering depending at the position of the user equipment (29) and filtering out cells that are further away than a distance threshold, are outside a certain area and/or have a pilot tone strength under a level threshold.

20. A controller according to claim 18 or 19, **characterized in that** the controller is arranged to make the filtering depending on the direction of the user equipment (29) and filtering out all or some of the cells that are not in said direction.

21. A controller according to any of the claims 18 to 20, **characterized in that** the controller is arranged to select how many cells that are to be filtered out depending on the speed of the user equipment (29), so that fewer cells are filtered out when the speed is higher than when the speed is lower.

22. A controller according to claim 21, **characterized by**, when a distance threshold and/or level threshold is used, then the controller is arranged to change the distance threshold and/or level threshold depending on the speed of the user equipment (29).

23. A controller according to any of the claims 18-22, **characterized in that** when the network includes cells on different hierarchical levels, then the controller is arranged to make the filtering depending on the speed of the user equipment (29) and to filter out all or some of larger cells when the speed is under a speed threshold, and to filter out all or some of smaller cells when the speed is over said speed threshold.

24. A controller according to any of the claims 18-23, **characterized in that** when the network includes cells using different radio access technologies, then the controller is arranged to make the filtering depending on which radio access technology is used in the different cells.

25. A controller according to any of the claims 18-24, **characterized in that** by when the network is close to another network, then the controller is arranged to make the filtering depending on which network the different cells are connected.

26. A controller according to any of the claims 18-25, **characterized in that** the controller is arranged to use GPS technology, round trip time and/or observed time difference of arrival to estimate position of the user equipment (29).

27. A controller according to any of the claims 18-26, **characterized in that** the controller is arranged to use change in position to estimate direction and/or speed of the user equipment (29).

28. A controller according to any of the claims 18-27, **characterized by** using Doppler effect in frequency to estimate speed of the user equipment (29).

29. A serving controller according to any of the claims 18-28, **characterized in that** the serving controller is arranged to receive the neighbour cell list from a drift controller, including extra cell information; and to filter also depending on said extra cell information.

30. A drift controller according to any of the claims 18-28, **characterized in that** the drift controller is arranged to receive velocity vector related information from a serving controller; and to filter depending on said velocity vector related information and on extra cell information.

31. A user equipment (29) in communication with at least one cell (9, 14) defining an active set (30) in a radio network, which user equipment (29) has a velocity vector including position, speed and direction, **characterized in that** the user equipment is arranged to transmit information related to whole or part of said velocity vector; **in that** the user equipment is arranged to receive a filtered neighbour cell list (34), said filtered neighbour cell list (34) having been created by, depending on said velocity vector related information, filtering a neighbour cell list (31) associated with said active set (30); and **in that** the user equipment is arranged to measure pilot signal strength for the cells in the filtered neighbour cell list (34).

32. A user equipment according to claim 31, **characterized in that** the user equipment is arranged to use GPS technology, round trip time and/or observed time difference of arrival to estimate position of the user equipment (29).

33. A user equipment according to claim 31 or 32, characterizedd in that the user equipment is arranged to use change in position to estimate direction and/or speed of the user equipment (29).

34. A user equipment according to any of the claims 31-33, **characterized in that** the user equipment is arranged to use Doppler effect in frequency to estimate speed of the user equipment (29).
